# FASCICULE DE BREVET EUROPEEN

(11) **EP 2 773 524 B1**
(45) Date de publication et mention de la délivrance du brevet: **21.08.2019**
(21) Numéro de dépôt: 12799236.0
(22) Date de dépôt: 30.10.2012
(51) Int. Cl.: B60K 35/00, B60K 37/06, G06F 1/16, G06F 3/044

(54) **MODULE DE COMMANDE ET D'AFFICHAGE POUR VÉHICULE AUTOMOBILE**
STEUER- UND ANZEIGEMODUL FÜR EIN KRAFTFAHRZEUG
CONTROL AND DISPLAY MODULE FOR AUTOMOBILE VEHICLE

(30) Priorité: 03.11.2011 FR 1103338
(43) Date de publication de la demande: 10.09.2014
(73) Titulaire: Valeo Systèmes Thermiques, 78320 Le Mesnil-Saint-Denis (FR)
(72) Inventeur: BERAUD, Henri, F-94300 Vincennes (FR); HUYNH, Tan Duc, F-93330 Neuilly Sur Marne (FR); CORDUAN, Patrick, F-77390 Guignes (FR)
(74) Mandataire: Pothmann, Karsten
(86) Numéro de dépôt international: PCT/FR2012/000442
(87) Numéro de publication internationale: WO 2013/064757

(56) Documents cités:
- EP-A2- 2 345 953
- WO-A1-2011/083215
- WO-A2-2011/053742
- US-A1- 2003 174 128
- US-A1- 2007 152 983

## Description

La présente invention concerne un module de commande et d'affichage pour véhicule automobile comportant une dalle tactile capacitive et un écran à l'arrière de ladite dalle. Plus précisément, un tel module trouve une application avantageuse pour les commandes situées à proximité du conducteur, au niveau du panneau de bord ou de la console avant d'un véhicule automobile pour par exemple commander des fonctions de climatisation, d'un système audio, d'un système de téléphonie, d'un système multimédia ou encore d'un système de navigation.

Les dispositifs de commande et d'affichage de véhicule automobile comportent un écran pour l'affichage de données d'information ou de commandes. Ces écrans peuvent être recouverts d'une dalle tactile transparente permettant la saisie de commandes par les utilisateurs du véhicule. La dalle tactile permet de déterminer les coordonnées de l'appui d'un doigt d'utilisateur en utilisant par exemple la technologie capacitive.

Les dalles tactiles sont des éléments minces et fragiles qui laissent apparaître des bords saillants nécessitant d'être protégés et dissimulés. Pour cela, des cadres sont disposés tout autour des dalles tactiles, cachant les bords en formant une bordure en relief délimitant une cavité entre la dalle tactile capacitive et le cadre. L'écran d'affichage apparaît alors en retrait de la bordure du cadre.

Toutefois, les constructeurs automobiles cherchent aujourd'hui à rendre les façades de véhicule plus ergonomiques et esthétiques pour l'utilisateur en proposant des modules de commande et d'affichage d'aspect lisse et uniforme au toucher.

Le document WO 2011/083215 A1 divulgue l'objet du préambule de la revendication 1.

L'invention propose donc un module de commande et d'affichage pour véhicule automobile permettant d'obtenir une façade d'aspect lisse et uniforme au toucher.

A cet effet, la présente invention a pour objet un module de commande et d'affichage pour véhicule automobile comportant un écran, une dalle tactile capacitive superposant ledit écran et un cadre encadrant ladite dalle tactile capacitive et dont une bordure chevauche un bord périphérique de ladite dalle tactile capacitive en délimitant une cavité entre ladite dalle tactile capacitive et ledit cadre, caractérisé en ce que le module de commande et d'affichage comporte une plaque de verre collée sur ladite dalle tactile capacitive, comblant ladite cavité au moins partiellement pour rattraper la différence de niveau entre la dalle tactile capacitive et la face supérieure du cadre.

Selon une ou plusieurs caractéristiques du module de commande et d'affichage prise seule ou en combinaison,
- le module de commande et d'affichage comporte un film polariseur antireflet et anti-rayure recouvrant ladite plaque de verre,
- la différence entre l'épaisseur de la bordure du cadre et l'épaisseur de la plaque de verre et du film polariseur est inférieure ou égale à 0, 2 millimètres,
- l'épaisseur de la plaque de verre est de l'ordre de 1, 6 millimètres, l'épaisseur de la bordure est de l'ordre de 2 millimètres et l'épaisseur du film polariseur est de l'ordre de 0, 2 millimètres,
- le module de commande et d'affichage comporte un premier joint interposé entre la bordure et la plaque de verre,
- le module de commande et d'affichage comporte un deuxième joint interposé entre la dalle tactile capacitive et l'écran,
- la section de la bordure du cadre présente une paroi arrondie,
- le rayon de courbure de la paroi arrondie est de l'ordre de 0, 2 millimètres,
- le cadre comporte un matériau polycarbonate ou un matériau PMMA,
- le cadre est moulé.

La plaque de verre comble la cavité laissée par le cadre rattrapant ainsi au moins partiellement la différence de niveau entre la dalle tactile capacitive et le cadre, de sorte que visuellement et tactilement, l'utilisateur ne perçoive qu'une surface lisse et uniforme au toucher, sans aspérités ou renflements, le glissement du doigt sur la frontière entre la plaque de verre et le cadre n'étant pas perceptible.

Par ailleurs, la plaque de verre améliore la sensibilité de la détection capacitive de la dalle tactile située en dessous, la constante diélectrique du verre étant à peu près trois fois plus élevée qu'aurait plus l'être un élément en plastique.

En plus de sa fonction de comblement et d'amélioration de la détection capacitive, la plaque de verre permet de protéger la dalle tactile capacitive.

D'autres caractéristiques et avantages de l'invention ressortiront de la description suivante, donnée à titre d'exemple, sans caractère limitatif, en regard des dessins annexés sur lesquels :
- la figure 1 représente une vue schématique en coupe de côté d'un premier exemple de réalisation d'un module de commande et d'affichage, et
- la figure 2 représente une vue en coupe de côté d'un détail d'un deuxième exemple de réalisation d'un module de commande et d'affichage.

Sur ces figures, les éléments identiques portent les mêmes numéros de référence.

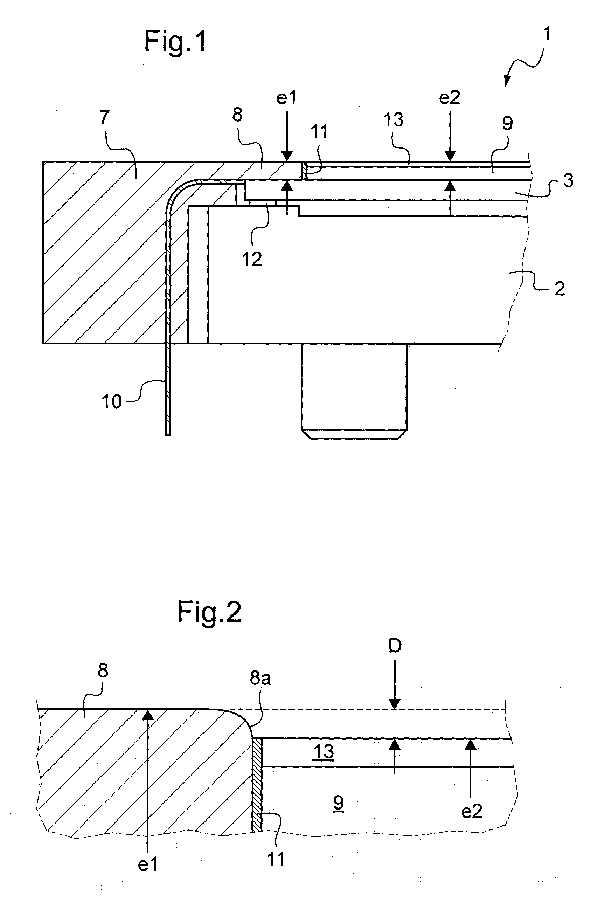

On a représenté un premier exemple de module de commande et d'affichage 1 pour véhicule automobile sur la figure 1.

Ce module de commande et d'affichage 1 peut être fixé à proximité de l'utilisateur, par exemple au niveau de la console centrale du véhicule ou au niveau du panneau de bord (non représenté) pour par exemple commander des fonctions de climatisation, d'un système audio, d'un système de téléphonie, d'un système multimédia ou encore d'un système de navigation.

Le module de commande et d'affichage 1 comporte un écran 2 pour l'affichage de données d'information ou de commandes, une dalle tactile capacitive 3 superposant l'écran 2 pour la saisie de commandes par un utilisateur, et un cadre 7 encadrant la dalle tactile capacitive 3.

La dalle tactile capacitive 3 est transparente pour être placée sur l'écran 2 et servir de moyen de saisie. La dalle tactile capacitive 3 est en verre et comporte par exemple un matériau d'ITO (Oxyde d'indium-étain), tel qu'en couches minces, permettant à la fois une bonne conductivité électrique et une transparence optique.

La dalle tactile capacitive 3 détermine les coordonnées du point où l'utilisateur appuie avec son doigt sur la surface de commande. Le déplacement ou l'appui du doigt d'un utilisateur provoque la création d'un signal variant avec la localisation et le déplacement de son doigt au contact et selon l'étendue sur cette surface.

L'écran 2 comporte par exemple un afficheur TFT (utilisant la technologie de couches minces de transistor ou « Thin film Transistor » en anglais).

L'écran 2 et la dalle tactile capacitive 3 permettent ainsi la saisie de commandes et l'affichage de données correspondantes.

Le cadre 7 qui encadre la dalle tactile capacitive 3 peut aussi loger l'écran 2. L'ouverture du cadre 7 présente un profil muni d'une bordure 8 en saillie vers le centre de l'ouverture du cadre 7, qui chevauche la dalle tactile capacitive 3 sur un bord périphérique de la dalle tactile capacitive 3, délimitant ainsi une cavité au-dessus de la dalle tactile capacitive 3, entre la dalle tactile capacitive 3 et l'extrémité de la bordure 8 du cadre 7.

Le profil du cadre 7 comprenant la bordure 8 présente par exemple une forme en « L » coopérant avec la dalle tactile capacitive 3 pour la retenir.

Le module de commande et d'affichage 1 comporte en outre une plaque de verre 9 (ou « coverlay glass » en anglais), collée sur la dalle tactile capacitive 3 par une colle optique liquide.

La plaque de verre 9 est transparente et présente un volume adapté pour combler au moins partiellement, la cavité laissée par le cadre 7 et rattraper ainsi la différence de niveau entre la hauteur de la dalle tactile capacitive 3 et la hauteur du cadre 7.

La plaque de verre 9 peut rattraper complètement la différence de niveau entre la face supérieure de la bordure 8 et la dalle tactile capacitive 3, mettant ainsi au même niveau la face supérieure du cadre 7 et la plaque de verre 9.

La plaque de verre 9 peut en outre rattraper en partie la différence de niveau, laissant un faible volume pour disposer un film, tel qu'un film polariseur antireflet 13, ainsi qu'un volume de retrait pour éviter l'arrachement du film. La différence de niveau restante entre la face supérieure du film et la face supérieure de la bordure 8 est minime, c'est-à-dire qu'elle est inférieure ou de l'ordre de 0, 2 millimètres.

La plaque de verre 9 présente ainsi une surface plus petite que celle de la dalle tactile capacitive 3 de sorte que la section de l'ensemble formé par l'accolement de la plaque de verre 9 et de la dalle tactile capacitive 3, présente une forme de « T » inversé, s'insérant sous la bordure 8 du cadre 7.

Ainsi, le cadre 7 protège et cache les bords périphériques de la dalle tactile capacitive 3 et la plaque de verre 9 aligne la hauteur du cadre 7 de sorte que l'utilisateur ne perçoive - qu'une surface lisse et uniforme au toucher, sans aspérités ou renflements, le glissement du doigt sur la frontière entre la plaque de verre 9 et le cadre 7 n'étant pas perceptible.

Par ailleurs, la plaque de verre 9 améliore la sensibilité de la détection capacitive de la dalle tactile 3 située en dessous, la constante diélectrique du verre étant à peu près trois fois plus élevée qu'aurait pu l'être un élément de plastique.

En plus de ses fonctions de comblement et d'amélioration de la détection capacitive, la plaque de verre 9 permet également de protéger la dalle tactile capacitive 3.

Le cadre 7 est par exemple en matériau polycarbonate ou un matériau PMMA (polyméthacrylate de méthyle).

Le cadre 7 peut comporter des zones décorées obtenues par exemple par un procédé de peinture avec ou sans grattage laser, ou par la technologie de transfert d'encre IMD (« In Mold Décoration » en anglais).

Le cadre 7 peut également comporter des zones adaptées pour être rétro-éclairées. Le rétroéclairage permet de donner des informations au conducteur en conduite de jour ou de nuit, en donnant l'illusion que ceux-ci sont complètement intégrés dans le module 1, sans nuire à l'aspect lisse et régulier de la façade.

Le cadre 7 est par exemple moulé. On peut alors prévoir que la section du profil de la bordure 8 du cadre 7 présente une paroi arrondie 8a comme représenté sur la figure 2. La bordure arrondie 8a est plus facile à obtenir par moulage et présente un plus bel aspect esthétique.

On peut aussi prévoir que le cadre 7 comporte des inserts métalliques dans le moulage du cadre 7, pour rigidifier la façade de commande du module 1.

En outre, le module de commande et d'affichage 1 comporte une nappe de connexion 10 (figure 1) flexible, permettant le câblage des câbles électriques d'alimentation et de sortie de la dalle tactile capacitive 3. La partie « technique » du module 1 est ainsi dissimulée par le cadre 7.

Par ailleurs, on peut aussi prévoir que le module de commande et d'affichage 1 comporte un premier joint 11, tel qu'un joint silicone, interposé entre la bordure 8 et la plaque de verre 9 pour garantir l'étanchéité du module 1 et éviter l'intrusion d'impuretés telles que des poussières ou des liquides entre la plaque de verre 9 et le cadre 7 ou pour éviter les décharges électrostatiques.

Le module de commande et d'affichage 1 peut également comporter un deuxième joint 12, tel qu'un joint élastomère, en forme de cadre, interposé entre l'écran 2 et la dalle tactile capacitive 3. Le deuxième joint 12 en compression contraint la dalle tactile capacitive 3 contre la bordure 8 du cadre 7. Il permet en outre d'absorber les variations dimensionnelles entre les différents éléments du module 1 et de protéger la façade de commande contre les poussières et les liquides.

Le module de commande et d'affichage 1 peut aussi comporter un film polariseur antireflet 13, tel que rugueux (ou « antiglare » en anglais) et anti-rayure recouvrant la plaque de verre 9. Le film polariseur 13 permet de limiter les rayures, les effets de brillance ainsi que les empreintes de traces de doigts.

On prévoit alors que la différence D entre l'épaisseur e1 de la bordure 8 du cadre 7 et l'épaisseur e2 de la plaque de verre 9 et du film polariseur 13 soit de l'ordre de 0, 2 millimètres. Cette différence de niveau est minime et n'est pas perceptible visuellement. Par contre, en prévoyant que le film polariseur 13 soit légèrement en retrait de la bordure 8 du cadre 7, on rend les bords du film polariseur 13 plus difficilement accessibles, ce qui permet d'éviter l'arrachement dudit film.

L'épaisseur de la plaque de verre 9 est alors par exemple de l'ordre de 1, 6 millimètres et l'épaisseur du film polariseur de l'ordre de 0, 2 millimètres tandis que l'épaisseur e1 de la bordure 8 est de l'ordre de 2 millimètres. On prévoit aussi que le rayon de courbure de la paroi arrondie 8a de la bordure 8 soit de l'ordre de 0, 2 millimètres.

La plaque de verre 9 permet ainsi de présenter une surface lisse au toucher, d'améliorer la sensibilité et la performance de la détection capacitive de la dalle tactile 3 et de protéger la dalle tactile capacitive 3.

## Revendications

1. Module de commande et d'affichage pour véhicule automobile comportant un écran (2), une dalle tactile capacitive (3) superposant ledit écran (2) et un cadre (7) encadrant ladite dalle tactile capacitive (3) et dont une bordure (8) chevauche un bord périphérique de ladite dalle tactile capacitive (3) en délimitant une cavité entre ladite dalle tactile capacitive (3) et ledit cadre (7), **caractérisé en ce que** le module de commande et d'affichage comporte une plaque de verre (9) collée sur ladite dalle tactile capacitive (3), comblant ladite cavité pour rattraper au moins partiellement la différence de niveau entre la dalle tactile capacitive (3) et la face supérieure du cadre (7).

2. Module de commande et d'affichage selon la revendication 1, **caractérisé en ce qu'**il comporte un film polariseur (13) antireflet et anti-rayure recouvrant ladite plaque de verre (9).

3. Module de commande et d'affichage selon la revendication 2, **caractérisé en ce que** la différence (D) entre l'épaisseur (e1) de la bordure (8) du cadre (7) et l'épaisseur (e2) de la plaque de verre (9) et du film polariseur (13) est inférieure ou égale à 0, 2 millimètres.

4. Module de commande et d'affichage selon la revendication 3, **caractérisé en ce que** l'épaisseur de la plaque de verre (9) est de l'ordre de 1, 6 millimètres, l'épaisseur (e1) de la bordure (8) est de l'ordre de 2 millimètres et l'épaisseur du film polariseur (13) est de l'ordre de 0, 2 millimètres.

5. Module de commande et d'affichage selon l'une des revendications précédentes, **caractérisé en ce qu'**il comporte un premier joint (11) interposé entre la bordure (8) et la plaque de verre (9).

6. Module de commande et d'affichage selon l'une des revendications précédentes, **caractérisé en ce qu'**il comporte un deuxième joint (12) interposé entre la dalle tactile capacitive (3) et l'écran (2).

7. Module de commande et d'affichage selon l'une des revendications précédentes, **caractérisé en ce que** la section de la bordure (8) du cadre (7) présente une paroi arrondie (8a).

8. Module de commande et d'affichage selon la revendication 7, prise ensemble avec l'une des revendications 3 ou 4, **caractérisé en ce que** le rayon de courbure de la paroi arrondie (8a) est de l'ordre de 0, 2 millimètres.

9. Module de commande et d'affichage selon l'une des revendications précédentes, **caractérisé en ce que** le cadre (7) comporte un matériau polycarbonate ou un matériau PMMA.

10. Module de commande et d'affichage selon la revendication 9, **caractérisé en ce que** le cadre (7) est moulé.

## Patentansprüche

1. Steuer- und Anzeigemodul für ein Kraftfahrzeug, umfassend einen Bildschirm (2), eine über dem Bildschirm (2) liegende kapazitive berührungsempfindliche Platte (3) und einem Rahmen (7), der die kapazitive berührungsempfindliche Platte (3) einrahmt und von dem eine Einfassung (8) einen Umfangsrand der kapazitiven berührungsempfindlichen Platte (3) überlappt, wobei ein Hohlraum zwischen der kapazitiven berührungsempfindlichen Platte (3) und dem Rahmen (7) begrenzt wird, **dadurch gekennzeichnet, dass** das Steuer- und Anzeigemodul eine auf die kapazitive berührungsempfindliche Platte (3) geklebte Glasscheibe (9) aufweist, die den Hohlraum ausfüllt, um den Höhenunterschied zwischen der kapazitiven berührungsempfindlichen Platte (3) und der Oberseite des Rahmens (7) zumindest teilweise auszufüllen.

2. Steuer- und Anzeigemodul nach Anspruch 1, **dadurch gekennzeichnet, dass** es eine polarisierende Antireflex- und Kratzschutzfolie (13) umfasst, welche die Glasscheibe (9) bedeckt.

3. Steuer- und Anzeigemodul nach Anspruch 2, **dadurch gekennzeichnet, dass** die Differenz (D) zwischen der Dicke (e1) der Einfassung (8) des Rahmens (7) und der Dicke (e2) der Glasscheibe (9) und der polarisierenden Folie (13) kleiner als oder gleich 0,2 Millimeter ist.

4. Steuer- und Anzeigemodul nach Anspruch 3, **dadurch gekennzeichnet, dass** die Dicke der Glasscheibe (9) in der Größenordnung von 1,6 Millimetern liegt, die Dicke (e1) der Einfassung (8) in der Größenordnung von 2 Millimetern liegt und die Dicke des polarisierenden Films (13) in der Größenordnung von 0,2 Millimetern liegt.

5. Steuer- und Anzeigemodul nach einem der vorhergehenden Ansprüche, **dadurch gekennzeichnet, dass** es eine erste Dichtung (11) umfasst, die zwischen der Einfassung (8) und der Glasscheibe (9) angeordnet ist.

6. Steuer- und Anzeigemodul nach einem der vorhergehenden Ansprüche, **dadurch gekennzeichnet, dass** es eine zweite Dichtung (12) umfasst, die zwischen der kapazitiven berührungsempfindlichen Platte (3) und dem Bildschirm (2) angeordnet ist.

7. Steuer- und Anzeigemodul nach einem der vorhergehenden Ansprüchen, **dadurch gekennzeichnet, dass** der Querschnitt der Einfassung (8) des Rahmens (7) eine gerundete Wand (8a) aufweist.

8. Steuer- und Anzeigemodul nach Anspruch 7 in Kombination mit einem der Ansprüche 3 oder 4, **dadurch gekennzeichnet, dass** der Krümmungsradius der gerundeten Wand (8a) in der Größenordnung von 0,2 Millimetern liegt.

9. Steuer- und Anzeigemodul nach einem der vorhergehenden Ansprüchen, **dadurch gekennzeichnet, dass** der Rahmen (7) ein Polycarbonatmaterial oder ein PMMA-Material aufweist.

10. Steuer- und Anzeigemodul nach Anspruch 9, **dadurch gekennzeichnet, dass** der Rahmen (7) spritzgegossen ist.

## Claims

1. Control and display module for a motor vehicle, comprising a screen (2), a capacitive touchpad (3) on top of said screen (2) and a frame (7) surrounding said capacitive touchpad (3) and of which a border (8) overlaps a peripheral edge of said capacitive touchpad (3) while delimiting a cavity between said capacitive touchpad (3) and said frame (7), **characterized in that** the control and display module comprises a glass plate (9) adhesively bonded to said capacitive touchpad (3), filling said cavity in order to compensate at least partially for the difference in level between the capacitive touchpad (3) and the upper surface of the frame (7).

2. Control and display module according to Claim 1, **characterized in that** it comprises an antireflection and scratchproof polarizing film (13) covering said glass plate (9).

3. Control and display module according to Claim 2, **characterized in that** the difference (D) between the thickness (e1) of the border (8) of the frame (7) and the thickness (e2) of the glass plate (9) and of the polarizing film (13) is less than or equal to 0.2 millimetres.

4. Control and display module according to Claim 3, **characterized in that** the thickness of the glass plate (9) is of the order of 1.6 millimetres, the thickness (e1) of the border (8) is of the order of 2 millimetres and the thickness of the polarizing film (13) is of the order of 0.2 millimetres.

5. Control and display module according to one of the preceding claims, **characterized in that** it comprises a first seal (11) interposed between the border (8) and the glass plate (9).

6. Control and display module according to one of the preceding claims, **characterized in that** it comprises a second seal (12) interposed between the capacitive touchpad (3) and the screen (2).

7. Control and display module according to one of the preceding claims, **characterized in that** the cross section of the border (8) of the frame (7) has a rounded wall (8a).

8. Control and display module according to Claim 7, taken together with either of Claims 3 and 4, **characterized in that** the radius of curvature of the rounded wall (8a) is of the order of 0.2 millimetres.

9. Control and display module according to one of the preceding claims, **characterized in that** the frame (7) comprises a polycarbonate material or a PMMA material.

10. Control and display module according to Claim 9, **characterized in that** the frame (7) is moulded.
